(19) Europäisches Patentamt / European Patent Office / Office européen des brevets

(11) **EP 4 419 286 B1**

(12) **EUROPEAN PATENT SPECIFICATION**

(45) Date of publication and mention
of the grant of the patent:
**09.07.2025 Bulletin 2025/28**

(21) Application number: **23706798.8**

(22) Date of filing: **27.02.2023**

(51) International Patent Classification (IPC):
**B23K 26/03** *(2006.01)*   **B23K 26/04** *(2014.01)*
**B23K 26/08** *(2014.01)*   **B23K 26/38** *(2014.01)*
**B23K 26/70** *(2014.01)*

(52) Cooperative Patent Classification (CPC):
**B23K 26/032; B23K 26/043; B23K 26/08;
B23K 26/38; B23K 26/70**

(86) International application number:
**PCT/EP2023/054801**

(87) International publication number:
**WO 2023/180014 (28.09.2023 Gazette 2023/39)**

(54) **DETERMINATION OF CONTOUR DEVIATIONS FOR CONTROLLING A LASER CUTTING MACHINE**

BESTIMMUNG VON KONTURABWEICHUNGEN ZUR STEUERUNG EINER LASERSCHNEIDMASCHINE

DÉTERMINATION DES ÉCARTS DE CONTOUR DESTINÉE À LA COMMANDE D'UNE MACHINE DE DÉCOUPAGE AU LASER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.03.2022 EP 22164097**

(43) Date of publication of application:
**28.08.2024 Bulletin 2024/35**

(73) Proprietor: **Bystronic Laser AG
3362 Niederönz (CH)**

(72) Inventors:
• **HAAS, Titus
4805 Brittnau (CH)**
• **LÜDI, Andreas
3400 Burgdorf (CH)**

(74) Representative: **Schwarz, Claudia
Schwarz + Kollegen
Patentanwälte
Heilmannstraße 19
81479 München (DE)**

(56) References cited:
**CN-A- 101 209 641     DE-A1- 102007 008 699
DE-A1- 102018 217 919     US-A9- 2019 155 248**

**Description**

The present invention is in the field of laser cutting technology and relates in particular to a method for controlling a laser cutting machine and for calculating contour deviations, a computing unit and a computer program.

The demands on laser cutting machines with respect to productivity and precision are constantly growing. The aim is to be able to cut a workpiece/part as quickly and precisely as possible. However, there are limits to these two goals, or the goals "as quickly as possible" and "as precisely as possible" are even in opposition. For example, the faster you want to cut around a corner, the geometrically less precise this corner will be cut, since the actual cutting contour will deviate from the target contour because of overshooting due to inertia of the machine, axes, cutting bridge and cutting head, and resilience (mass inertia). The precise position of the machining laser beam typically also cannot be measured because internal encoder measurement systems on the drive axes only measure indirectly (generally optically) and cannot take into account the moments of inertia and/or resilience described above.

Other reasons for the deviations between the actual and target cutting contours are vibrations of the gantry system or of the robot to which the machining head is attached, or vibrations of the workpiece or the workpiece support, which lead to overshooting when cutting along the cutting contour. Other reasons for path deviations can also be friction, static friction, backlash, incorrect compensation values, etc.

In order for it to be possible to cut the part to be cut within a desired tolerance (path deviation/contour error), the dynamic limits of a machine (especially in the region of small radii and corners) are usually subject to blanket restrictions, which leads to reduced productivity or reduction in quality.

In addition, there are different structural designs of laser cutting systems with bridges (gantries), axes, etc. of different sizes, each of which has a different mass inertia and/or resilience. A blanket reduction in dynamics is therefore not expedient. Smaller systems, for example, require less reduction in dynamics, while very large moving masses require greater reduction in dynamics.

It is therefore desirable to be able to determine the correct path deviations for the machine (with the components such as gantry, axes, bridge, cutting head, etc.).

Various approaches are known from the prior art in order to be able to determine the path accuracy. These approaches are partially based on optical methods.

DE 10 2018 217919 A1 discloses a method of determining a corrected machining position of a machining head relative to a heated workpiece, comprising: locally resolved detection of a surface area of the not yet heated workpiece at predetermined machining head position by an optical detector, machining and heating the workpiece by the machining head, wherein the machining comprises aligning a machining laser beam on the workpiece by means of the machining head, spatially resolved detection of a surface area of the heated workpiece by the optical detector, which at least partially overlaps with the surface area of the unheated workpiece at the predetermined machining head position, and determining the corrected machining head position by comparing the spatially resolved surface area of the heated workpiece with the spatially resolved surface area of the not yet heated workpiece.

DE 10 2018 217 940 A1 proposes a method with a camera and reflection pattern to increase contour accuracy. A camera is moved along the target path of a part contour, which captures the reflection pattern of the workpiece surface in overlapping subregions in a spatially resolved manner and uses this to measure deviations in the path travelled with respect to the target path. In particular, the position increments along the part contour are determined by the optimum of a similarity function, which is also described in DE 10 2005 022 095 A1.

Proceeding from this prior art, the object of the invention is to determine contour deviations from a specified target path and thus contour fidelity for a cutting task. In particular, the determination of contour deviations, where applicable, for correction or compensation should already take place before cutting in order to reduce the number of incorrectly cut parts. Overall, the quality of the cutting result is to be improved. In addition, it should be possible to calibrate a cutting system or cutting machine with its structural components (such as gantry, machine axes, cutting bridge, cutting head, etc.). In other words, contour deviations are to be determined for a cutting system in order to be able to specifically adapt the dynamics at specific positions on the target path. This is intended to improve the quality and productivity of the parts to be cut.

This object is achieved by the appended claims, in particular by a computer-implemented method, a computing unit and a computer program.

According to a first aspect, this object is achieved by a computer-implemented method for calculating contour deviations for controlling a laser cutting machine, which can arise when cutting workpieces with a machining laser beam of the laser cutting machine, comprising the following method steps:

a) reading in a cutting plan that specifies a target path for a cutting head of the laser cutting machine;
b) defining a reference texture or reading in a reference texture from the cutting plan, wherein the reference texture is an engraving;
c) performing an application run of the laser cutting head to apply the reference texture at least at selected positions along the target path on the workpiece;
d) performing an image capture run of the laser cutting head to capture at least one image, in which at least part of the applied reference texture is imaged, by means of an optical capture device arranged on the laser cutting head at at least one of the selected positions along the target path;

e) reconstructing at least one virtual reconstruction image on the basis of control values that are calculated from the target path and on the basis of the defined reference texture;

f) using an image processing means to compare the captured at least one image and the reconstructed virtual reconstruction image to determine a displacement vector between associated pixels in each case;

g) outputting the contour deviation calculated from the determined displacement vector.

The calculated and output contour deviation is preferably used to calibrate the laser cutting machine. "Calibration" of the laser cutting machine is therefore based on the calculated contour deviations. The calibration may include creating a compensation model for the laser cutting machine. The calculated contour deviations are preferably captured and stored with their different dependencies, i.e. in particular according to an acceleration, an advancement, a change in direction, a position on the work table, etc. The calibration is used to avoid or minimise contour deviations in the productive cutting. The output contour deviation can be used in particular to specifically reduce the dynamics at selected positions on the target path, specifically according to the specific contour deviations caused by the mass inertia and/or resilience of the moving components of the laser cutting system. Instead of reducing the dynamics, according to the invention the position value of the control value (X, Y) is shifted by the contour deviation (a few micrometres). The pair of values determined in this way (shifted position value) is used as a control instruction for controlling the axes. The calculated control instructions include correction instructions and are determined on the basis of the calculated contour deviation.

The reduction in dynamics at certain positions is a measure to reduce contour deviations. Alternatively or additionally and preferably, the control values (X, Y) should be shifted by the displacement vector. This has the technical advantage that the dynamically induced contour errors can be counteracted. Instead of reducing the dynamics, the position value of the control value (X, Y) is shifted by the contour deviation (a few micrometres).

The solution described here has a number of advantages. A reference texture is used as a simple but precisely definable signature. The method can be performed prior to productive cutting; no test cutting process needs to be performed (no micro-joints). The method is quick and provides calibration of the laser cutting machine, in particular before productive cutting. The method is precise and works without waste. With this procedure it is possible to calibrate the machine without having to cut parts "unnecessarily" (since only for the calibration). The metal sheet only has to be provided with the reference texture; it does not need to be cut.

The terms used in this application are explained below in more detail.

The laser processing machine can preferably be a laser cutting machine and in particular a laser cutting machine in a flatbed cutting system. The laser cutting machine is designed in particular for cutting flat workpieces, which are fed to the laser cutting machine for this purpose.

The laser cutting machine comprises a laser cutting head. The laser cutting head is moved over the workpiece (along the target path) by an electromechanical drive system. The laser cutting machine can be designed with a portal or gantry drive having a cutting bridge, preferably having two feed motors, which move the cutting bridge synchronously in one axis. The laser cutting head can in turn be movably arranged on the cutting bridge. Preferably, the laser cutting head can be moved in 3 spatial axes relative to the cutting bridge.

Alternatively, the cutting head can also be arranged on a mobile robot. The mobile robot is also moved via an electromechanical drive system, preferably having at least 2 motors for the 2 spatial axes (X, Y-axis in the plane of the work table). The mobile robot can also be designed with 6 degrees of freedom (6DOF).

The laser processing machine can be designed as a robot-controlled system or as a portal system. The laser machining head or, in particular, the laser cutting head can typically only be connected directly to one axis; for example, to the Z-axis.

The drive system is controlled with control values and/or control instructions. Control values are calculated from the target path. Control instructions include correction instructions to compensate for the calculated contour deviations. Control instructions are used to control the drive system and in particular the individual axes $(x\_d, y\_d)$.

Workpieces are in particular flat workpieces, preferably made of metal. The workpieces are placed on a machining table (e.g. cutting grid) for machining by the laser cutting machine. A laser cutting head is moved along the target path using mechanical components and a controller in order to cut parts from the workpiece.

The path deviations can extend in the X-direction and Y-direction in relation to the workpiece. The path deviations in the X-direction and Y-direction represent contour deviations (from a target contour), i.e. in particular deviations between the (intended) target path and the (actually travelled) actual path. The deviations result from the inertia of the moving masses and the resilience between the machine components, e.g. the cutting head, the machine axes.

The target path can be determined from the cutting plan and is used as a specification for the target geometry. Usually, the target path has no time information or no time reference.

A controller (e.g. CNC) of the laser processing machine uses the cutting plan and the target path to create control values for controlling the drive axes for moving the laser cutting head. The control values have a time reference. The control values thus encode a trajectory (= timedependent path).The control values are used to control the drive system (with at least 2 axes, alternatively 3 axes: X, Y and Z-axes). The generation of the control values is basically known. According to the invention, the generated control values are (slightly) adapted in order to compensate for/reduce any contour deviations that may occur. Alternatively, a dynamic radius correction functionality can also be used (the tool radius is adjusted in the control cycle (approx. 1ms) and the control value is adjusted accordingly).

Encoder values for each of the drive axes can be provided from a measuring system of the drive system (preferably with three drive axes). The encoder values represent the position of the motors of a drive axis actually reached by the drive axes at a defined point in time. However, the position of the laser cutting head and/or the tool centre point (TCP) cannot be deduced from the encoder values, since mass inertia during movement leads to positioning inaccuracies. With the help of the axis or drive encoder values, the machine controller knows precisely where (location A) image A was taken by the camera. The computing unit or the machine controller can thus derive what the image to be expected (virtual reconstruction image A') at location A should look like.

Among other things, the mass inertia of the laser cutting head causes contour errors during movement. These contour errors can be determined with the solution presented here. Control instructions for moving the cutting head can in turn be calculated from the determined contour deviations, with which the contour deviations are reduced or even completely eliminated. In particular, the following calculations can be used:

Xd: X-axis control value,
Xt: X-direction TCP value,
Xe: X-axis encoder value,
Kax (contour deviation in X-direction),

$$Kax = Xt - Xd,$$

Kcomp: Factor by which the contour deviation is compensated (1: 100%, 0.8:80%). It can be advantageous not to compensate for the entire difference, but only a portion.
Xd*: New control value or control instruction that compensates for the contour deviation (in the X-direction):
Xd*=Xd+Kax, where Kax can be compensated for via a dynamic contour deviation interface (e.g. ISG/-Beckhoff) or via the dynamic tool radius correction functionality or by adapting the dynamics.

The control instructions are therefore also control values, which, however, contain correction instructions for compensating for the contour errors. The control value means the value that is assigned to the motor (X_d, Y_d for the motors of the X and Y-axes). If the contour errors are compensated for, slightly adjusted control values (X_d*, Y_d*), namely the control instructions, are used.

The control instructions are typically position-specific since the contour deviations are positiondependent. The correction instructions can also be position-specific. For example, the contour deviation can be compensated for by factor x at a first position (e.g. first corner) and by factor y at a second position (e.g. second corner).

Preferably, the setpoints should be adjusted. The dynamics do not necessarily have to be reduced. If there is a desire to compensate by reducing the dynamics, a factor of approximately 0.8-0.1 would make sense (with a maximum acceleration of 10 m/s^2). However, the factors depend heavily on the underlying system and the maximum possible dynamics).

The control instructions are typically axis-specific.

The control instructions contain the correction instructions to compensate for the determined path deviations due to the mass inertia or resilience of the moving components. The components of a flatbed machine are selected from the group consisting of:

- gantry system (X1 and X2-axis),
- Y-axis,
- Z-axis,
- cutting head,
- energy and power supply cables,
- signal-conducting cables (to motors/sensors),
- cable carrier (in which the cables are guided),
- machine bed,
- cutting grid,
- casings, and
- workpiece.

The masses of the respective components can widely differ. For example, the bridge will have a significantly higher mass than the component with which the head is movably mounted on the bridge. By measuring with a camera at the TCP, it is possible to precisely determine the contour deviation. The cause of the contour deviation is basically of secondary importance, but in order to take account of the mass differences in the control instructions, the compensation factor (Kcomp) can be calculated as a function of the mass.

The total mass of the cutting head and the inertial components of the cutting head movement unit can range from 200 to 500 kg; the mass of the cutting head can range from 10 to 20 kg.

The primary objective of the present invention is to detect path deviations and in particular contour errors that cannot be inferred from the encoder values, such as cutting head overshooting at the corners. In the prior art, the contour deviations cannot be calculated precisely using the encoder values, which means that precise compensation is impossible. However, this compensation becomes possible with the present invention.

In a first embodiment of the invention, the reference texture is a texture; for example, in the form of a series of numbers and/or letters and/or a 2-dimensional pattern. In a second embodiment of the invention, the reference texture is the target path from the cutting plan. In both embodiments, the reference texture is applied to the workpiece.

The application is a physical machining process directly on the workpiece. The process is engraving with a laser. Alternatively, but not according to the invention, another optical or mechanical method can be used.

Alternatively and also not according to the invention, a pattern (e.g. hole pattern) can be cut into the workpiece (e.g. metal sheet). It is also possible, but not according to the invention, to apply a reference texture to the workpiece with a printer (e.g. by means of an inkjet printer which is arranged outside of the cutting head but permanently connected).

The reference texture can, for example, be applied to the complete target path or only locally at selected positions. For example, the reference texture can be applied at corners or in the case of small radii when the direction is reversed. The reference texture can be applied in particular to positions where dynamically induced contour errors are to be expected.

At least one virtual reconstruction image is reconstructed in step e) on the basis of control values of the defined reference texture.

In principle, with the solution proposed here, two runs are carried out with the laser cutting head before the actual production cutting process, in which the laser is activated not for cutting - at most for applying the reference texture by means of an engraving process.

The two "preliminary runs" serve different purposes. The first run is an application run, which is used to apply the reference texture. The second run is an image capture run, which is used for image capture by means of an optical capture device. The optical capture device is arranged on the laser cutting head, preferably coaxially. When the laser cutting head moves, it can take pictures of the workpiece along the path traversed by the laser cutting head. Alternatively, the optical capture device can be arranged eccentrically on the laser cutting head with corresponding optical deflection elements. The optical capture device is, for example, a camera (e.g. CCD camera) or alternative devices for capturing images.

It should be noted that the image capture takes place on the actual path in a first embodiment (method 1), but on the target path in a second embodiment (method 2).

The application run takes place along selected positions and/or directly on the target path. In one exemplary embodiment, the reference texture can be engraved on the complete target path of a contour to be cut. In another exemplary embodiment, the reference texture cannot be engraved on the complete target path, but only on selected positions of the target path, for example on tight radii, corners and/or when the position of the laser cutting head is reversed and thus where the mass inertia and/or the resilience of the components of the cutting system have/has an increased effect.

The image capture run is carried out in particular where the reference texture was applied in the previous application run. In one exemplary embodiment, the image capture run can be carried out exactly where the application run was also carried out. In another exemplary embodiment, the image capture run can only be carried out in certain regions of the application run. This makes particular sense if the reference texture has been applied to the complete target path in the application run and the image capture is only to be carried out at selected positions, e.g. only at the corners, tight radii and/or when the position is reversed, in order to avoid unnecessary image recording. The image capture run therefore does not necessarily have to match the application run.

In addition, image capture can be configured during the image capture run. It can be configured in a default setting such that the image capture takes place during the image capture run according to a preconfigurable pattern (e.g. fixed time interval: an image recording is performed every 3 ms). Alternatively or additionally, it can be configured such that the image capture takes place at specific positions of the cutting plan, i.e. in particular at neuralgic positions (see above: in the case of tight radii, at corners, etc.). The image capture does not necessarily have to be carried out continuously during the image capture run, but can be triggered intermittently and in particular sporadically at neuralgic positions.

The positions can be configured on a (e.g. graphical) user interface (HMI).

The image processing means can contain an algorithm or another evaluation instruction (e.g. a heuristic, a digital image information extraction method).

The displacement vector lies at least in the plane of the workpiece, i.e. at least with X-direction and Y-direction values in a coordinate system.

The reference texture is preferably applied or overlaid directly on or along the target path (e.g. parallel thereto) that the laser cutting head is to traverse. The reference texture must be applied or overlaid in such a way that it can be detected from the field of view (FOV) of the camera. The reference texture is preferably applied over the target path in such a way that an overlapping region is created. The reference texture is usually larger than the target path, which is specified as a line or curve. The reference texture can have a size, in particular a height, which is in a range between 10 μm and 10 mm, the size or height being defined here as perpendicular to a departure direction of the cutting head. The lateral length or width, i.e. extending in the traversing direction, is variable and depends on the cutting plan or the contour.

The reference texture is used for local referencing between the virtual reconstruction image and an actually captured image at the same position. The reference texture can preferably be designed as a series of numbers, in particular as a continuous series of numbers and/or as a sequence of letters of an alphabet, in particular a continuous sequence of letters, or as a nonperiodic, non-linear and non-repetitive pattern. The reference texture can be, for example, a metal sheet or a flat object having an outer contour corresponding to the target path. The reference texture can be a pattern that was previously applied, e.g. engraved, to a metal sheet and/or a natural texture/surface microstructure along the target path (determined when traversing slowly).

The camera can preferably be arranged coaxially or centrally with respect to the laser beam optical unit and can be used to detect the process zone. A plurality of cameras can also be configured. The camera can be coupled to an illumination source. The camera can also be attached with an offset, rather than coaxially; then the offset must be known and is taken into account in the reconstruction of the path actually traversed by the cutting head.

The target path corresponds to the contour to be cut. The target path can be read in from a cutting plan. The target path corresponds to the desired geometry defined in the cutting plan.

According to a preferred embodiment of the invention, the reference texture can be selected in a configuration phase from a predefined set of patterns, which is preferably stored in a memory, and/or read in via a human-machine interface, HMI, for example. The reference texture is preferably determined automatically and presented as a suggestion on the HMI. The user then has the option of accepting the suggestion or modifying it. Additionally or alternatively, buttons can be provided on the HMI, via which the user can, so to speak, configure the reference texture themselves. This has the advantage that the contour fidelity determination method can also be executed if, for example, the data connection to the memory with the stored reference textures is temporarily interrupted.

In a preferred embodiment of the invention, the reference texture is configurable and can be configured in particular according to the nozzle used (nozzle width), the mechanical actuators, the cutting plan or the contour defined therein and/or cutting parameters (e.g. focal position).

In a further advantageous embodiment of the invention, commands can be provided that trigger the activation or switching-on of an illumination source, so that, for example, an illumination source, in particular an illumination laser, is switched on synchronously with the capturing of the frames. This is used to optimise the image capture and illumination of the process zone. The illumination source can be located in or on the camera or at another position, and act directly or indirectly (by reflection) on the process zone.

The calculation of contour deviations for calibrated control of the laser cutting machine can basically be carried out on different selected regions on the workpiece, which is positioned on a work table. This makes it possible, for example, to select the critical regions for contour error determination, such as those with many tight radii or complex trajectory requirements. This can be carried out, for example, by comparing with the material to be cut and/or with specifications from the cutting plan, for example taking into account the magnitude of the acceleration or the curvature. This is first because deviations from the target increments can also occur along a straight line. Although these affect the contour accuracy less, they can lead to local irregularities in the machining process.

In an advantageous embodiment of the invention, the method includes or comprises the following method step:

- calculating and applying or executing control instructions. These control instructions advantageously contain correction instructions for compensating for the contour deviations that have been output. The control instructions thus represent optimised control values for the individual axes (X, Y-axis). The control instructions are transmitted to the drive system for (improved) control. The correction instructions are axis-specific and include an X-axis and a Y-axis intercept. The correction instructions serve to compensate for the contour deviations that are caused by mass inertia and/or resilience of all the involved moving components of the drive system.

The contour errors calculated by the method proposed here can also be used to calibrate a machine model, to generalise a machine model (adapt according to the working space) and to improve the parameterisation of the controllers.

According to the invention, the reference texture is an engraving.

Typically, engraving is applied with a lower laser power than productive cutting. A larger nozzle spacing and a different focal position can be selected for engraving than for cutting. If necessary, the laser is pulsed (pulse frequency and pulse width (duration)). The penetration depth can be variable; it should be chosen to be so deep that you can see the engraving in the images (in particular in the range from a few micrometres to about 1 mm).

In a further preferred embodiment of the invention, the reference texture is applied in the application run with reduced dynamic values, which are lower than productive dynamic values. Applying it in a slow run has the advantage that the reference texture can be applied very precisely. In the image capture run, the reference texture is traversed along the target path with productive dynamic values with the laser deactivated, and the at least one image is captured in step d) in the meantime.

In a preferred embodiment of the invention, the dynamic value (vector or data set) contains information on speed, acceleration, jerk and/or other time derivatives thereof. There are two instances of the dynamics value: a productive dynamic value that applies during a productive (cutting) run, and a reduced dynamic value that can be encoded in the calculated control instructions to compensate for the determined path deviations. However, other measures to compensate for the contour deviations are also available (e.g. shifting the control values by a displacement vector).

Productive speed and/or productive acceleration and/or productive jerk is therefore the speed and/or acceleration and/or jerk that is specified for machining the workpiece, e.g. in the cutting plan or in a parameter file.

The reduced dynamic value (speed value and/or acceleration value and/or jerk value) is selected such that it is lower than the comparable value for productive machining (e.g. cutting). A typical low acceleration value is in the range of: 0.01-0.1 m/s^2. A typical (high) acceleration value for productive machining is in the range of: 1-100 m/s^2.

The acceleration value is primarily used since the speed is not the main factor in the dynamically induced errors. However, contour errors can also result at low speeds and high acceleration.

So that the captured images are still sufficiently sharp at productive speed, the exposure time of the optical capture device must be set to be sufficiently short. This setting is basically dependent on the lighting method and the intensity of the lighting. With a 2-watt illumination laser, an exposure time of 30 us is good. Exposure times from 1 us - 300 us are useful. The higher the exposure time, the greater the motion blur (the images blur). The settings can be made on an HMI. In addition, it has proven to be advantageous to set an illumination of an illumination means to a sufficiently high level during the image capture. Basically, for the selectable settings the greater the illumination, the lower the exposure can be.

In a further preferred embodiment of the invention, the reference texture is applied during the application run with a productive dynamic value that corresponds to that used in productive machining. In the image capture run, the target path is traversed with a reduced dynamic value when the laser is deactivated. The at least one image is captured in step d) during the image capture run. This corresponds to a second method or embodiment in which the reference texture is applied with a productive dynamic value and in particular with a productive speed and productive acceleration.

Traversing on the target path or along the target path is carried out without a machining laser beam of the processing machine activated for cutting. The laser can be activated for engraving and is operated with much lower power than for cutting. During the application run and the image capture run, the laser is deactivated for cutting.

In a further advantageous embodiment of the invention, the comparison in step f) takes place at the midpoint positions of the respective images (midpoint of the virtual reconstruction image and midpoint of the at least one captured image).

In a further advantageous embodiment of the invention, the reference texture can be a texture applied to a carrier object. The carrier object is arranged fixedly on a carrier region of the laser cutting machine for the workpiece and is position-calibrated there.

In a further advantageous embodiment of the invention, the reference texture is a texture projected onto the workpiece by a projector which is fixedly connected to the laser cutting machine and is position-calibrated.

In a further advantageous embodiment of the invention, the optical capture device can include at least one camera, which is arranged in or on the machining head (preferably coaxially) or on the drive system of the machining head.

In a further advantageous embodiment of the invention, an actual path can be extracted from at least one captured image, i.e. a path that was actually traversed with the cutting head.

In a further advantageous embodiment of the invention, the method is carried out before or during a productive cutting process. The method is preferably carried out before productive cutting. However, it is also possible to apply the reference texture outside the cutting zone (but still in the field of view of the camera). In this way, the image can be compared during the cutting for the purpose of contour deviation. If the method is used before productive cutting, the laser is deactivated or switched off (apart from engraving) during the application run and also during the image capture run.

In a further advantageous embodiment of the invention, the at least one image is captured by activating an illumination means (for example an illumination laser). This is typically with at least 50 mW. In principle, there is no upper limit to the wattage. Alternative or additional external illuminants can be used. It is important that the reference texture can be easily captured with the cutting head camera.

The solution to the problem has been described above on the basis of the computer-implemented method. Features, advantages or alternative embodiments mentioned here can also be applied to the other claimed subjects and vice versa. In other words, the present claims (which are directed, for example, to a computing unit, a laser cutting machine or a computer program (product) can also be further developed with the features described and/or claimed in connection with the method, and vice versa. The corresponding functional features of the method are thereby formed by corresponding present modules, in particular by hardware modules or microprocessor modules, of the system or of the product, and vice versa. In general, in computer science, a software implementation and a corresponding hardware implementation (e.g. as an embedded system) are equivalent.

Therefore, for example, a method step for "storing" data can be performed with a memory unit and corresponding instructions for writing data to the memory. In order to avoid redundancy, the device is therefore not described again explicitly, although it can also be used in the alternative embodiments described in relation to the method. The preferred embodiments of the invention described above in connection with the method are therefore not explicitly repeated for the device.

In a further aspect, the above object is achieved by a computing unit for carrying out the method described above. The computing unit is used to control a laser cutting machine and to calculate contour deviations that can arise when cutting workpieces with a machining laser beam of the laser cutting machine, having:

- a read-in interface for reading in a cutting plan that specifies a target path for a machining head of the laser processing machine;
- a reference texture definition module for defining a reference texture or for reading in the reference texture from the cutting plan, wherein the reference texture is an engraving; the reference texture definition module may be designed as or comprise a human-machine interface (HMI) as an input interface, via which inputs are detected in order to determine the reference texture. Alternatively, a "ready" reference texture, e.g. from a memory, can be read in. The reference texture definition module can alternatively or additionally be designed as a local computing unit which calculates the reference texture dynamically and/or specifically for a target path (e.g. a larger reference texture is selected in the case of a large kerf width);
- wherein the computing unit is designed to issue first instructions in order to cause an application run of the laser cutting head to apply the reference texture at least at selected positions along the target path on the workpiece;
- wherein the computing unit is also designed to issue second instructions to cause an image capture run of the laser cutting head to capture at least one image in which at least part of the applied reference texture is imaged by means of an optical capture device arranged on the laser cutting head at least one of the selected positions along the target path;
- wherein the computing unit comprises a reconstructor which is designed to reconstruct at least one virtual reconstruction image on the basis of control values which are calculated from the target path and on the basis of the defined reference texture;
- wherein the computing unit further comprises an image processing means, which is designed to compare the captured at least one image and the reconstructed virtual reconstruction image in order to determine a displacement vector between associated pixels;
- an output interface designed to output the contour deviation calculated from the determined displacement vector.

In a further aspect, the invention relates to a laser cutting machine comprising such a computing unit.
In a further aspect, the invention relates to a laser cutting machine for carrying out the method described above.
In a further aspect, the invention relates to a computer program, wherein the computer program can be loaded into a memory unit of a computer and contains program code sections in order to cause the computer to execute the method for determining path deviations for controlling a laser cutting machine when the computer program is executed in the computer.
In a further aspect, the invention relates to a computer program product, comprising a computer program as described above, which is designed to carry out a method as described above. It is also possible for the computer program to be stored on a computer-readable medium.
In the following detailed description of the figures, non-limiting exemplary embodiments with the features and further advantages thereof are discussed with reference to the drawings.

**Brief description of the figures**

Figure 1 — shows various processes of a method according to a preferred embodiment of the invention on a time axis;
Figure 2 — shows a schematic diagram for controlling the drive system of the laser cutting machine with its components;
Figure 3 — shows a schematic diagram for the calculation of control instructions for controlling the drive system on the basis of contour deviations that have been determined;
Figure 4 — shows a block diagram of a computing unit for calculating contour deviations for controlling a laser cutting machine by means of control instructions with correction instructions;
Figure 5 — shows a flow chart of a method for calculating contour deviations in different embodiments;
Figure 6 — shows a schematic representation of a laser cutting head;
Figure 7 — shows a schematic representation of a target path and an actual path;
Figure 8a — shows an example of a virtual reconstruction image; and
Figure 8b — shows an example of an actually captured image at the same position as that in figure 8a;

Figure 9a    shows an example of a virtual reconstruction image; and

Figure 9b    shows an example of an actually captured image at the same position as that in figure 9a;

Figure 10a    shows an example for a comparison of the captured image and the virtual reconstruction image; and

Figure 10b    is an enlarged view of the midpoints of the images shown in figure 10a;

Figure 11a    shows a schematic representation of a captured image at a corner of the target path;

Figure 11b    shows a schematic representation of the virtual reconstruction image at the same position as in figure 11a; and

Figure 11c    shows a schematic pictorial representation of the result of the image processing means (BV) for calculating the displacement vector;

Figure 12a    shows an example of a reference texture; and

Figure 12b    shows the reference texture from figure 12a applied to the workpiece;

Figure 13    shows an exemplary embodiment of a first method; and

Figure 14    shows an exemplary embodiment of a second method;

Figure 15    shows a front view of a laser cutting machine;

Figure 16    shows a representation of a laser cutting system with a cutting table and a cutting head;

Figure 17    shows a cascaded control circuit of a machine drive using the example of the X-axis;

Figure 18    shows an overview of the axis system of the laser cutting machine; and

Figures 19a 19d    to show a representation of the virtual reconstruction image and an associated image captured by the camera.

## Detailed description of exemplary embodiments with reference to the figures

The present invention relates to the control of a laser cutting machine L to compensate for calculated path deviations or contour deviations that are caused by inertia and/or resilience of the moving mass of the components of the laser cutting machine L involved in the cutting process.

The contour deviations can be determined even before a productive cutting process is carried out (i.e.

before contours are cut in the workpiece according to the cutting plan).

In order to determine possible path deviations of an actual path (as traversed by the cutting head) from a target path (according to specifications from the cutting plan), it is proposed that a cutting head with a camera be used and the path deviations (especially in the case of corners) be determined in a calibration process to calculate appropriate correction instructions and then to apply them during the (subsequent) productive machining of parts, whereby the path deviations are reduced and/or the time per part is reduced, with the path deviation remaining the same.

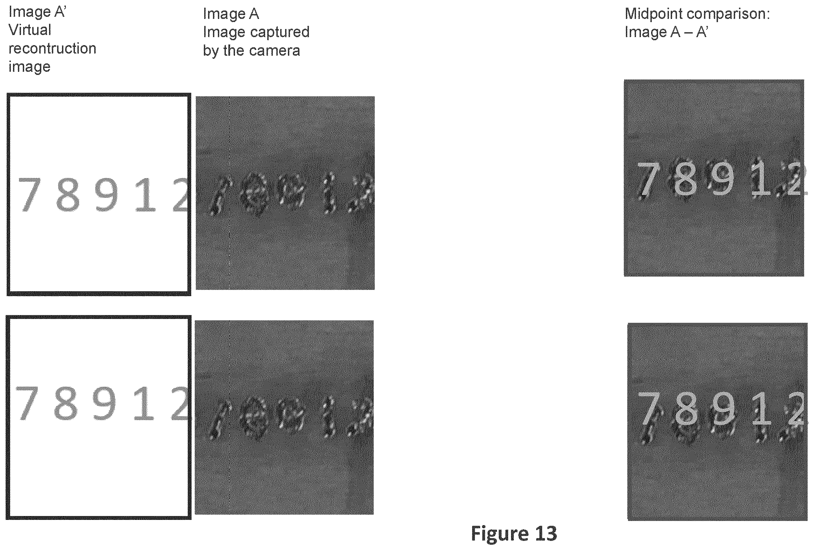

In a first embodiment of the invention, the following steps are provided (method 1, cf. also figure 13; see below):

1. Determine target path. The geometry that lies over a reference texture is meant as the target path.
2. Application run: Define a reference texture (e.g. a series of numbers) and apply (engrave) it to a metal sheet along the target path with the machining laser. The machine axes are moved slowly, so negligible inaccuracies in tool positioning can be expected. No special metal sheet is required. For example, the metal sheet that is to be machined next can be used straight away.
3. Image capture run: Traverse the target path (without cutting) at high speed or at production speed, with the camera recording frames (image A) at points of interest. In doing so, the encoder values are stored at location A during the recording of image A. For the purpose of optimised camera recordings, an illumination laser can also be switched on synchronously with the image recording.
4. Image processing: Comparison (matching) between the virtual target image (image A'), which can be determined using the pattern known to the machine controller and the precise encoder values, with the recorded actual image (image A).
5. Calculation of the contour deviation (target-actual), i.e. determination of the displacement vector (Dx, Dy) between the virtual reconstruction image (image A') and the actually recorded actual image (image A).
6. Compensation for the contour deviation by adjusting the target trajectory (or target geometry) using correction instructions.
7. Productive cutting with control instructions that implement the correction instructions.

In this first method, in step 4 (image comparison), the respective image midpoints of the virtual reconstruction image and the corresponding image captured with the camera are compared. In a second embodiment of the invention, contrary to method 1 described above, an engraving is applied at high (production-relevant) speed (application run), which represents the actual curve. In the second step, this actual curve is photographed at low speed at the points of interest along the target curve with the cutting head camera (image capture run). Comparison of the target and actual curve provides the sought displacement vector (Dx, Dy) between the target one and the actual one.

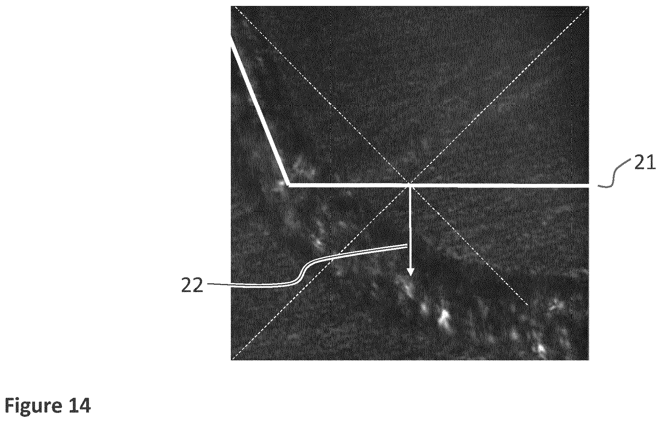

Method 2 (cf. also figure 14; see below) involves the following steps:

1. Determine target path, typically with corners or tight radii.

2. Application run: Define a reference texture that can also be engraved on the metal sheet with a high axial advancement. Most of the time this is just a (solid or dotted) line. With the machining laser, the reference texture is applied (in particular engraved) to a metal sheet as far as possible along the target path. The machine axes are moved quickly or at production speed or with high dynamic values, so inaccuracies in tool positioning must be expected, in particular at corners. No special metal sheet is required. For example, the metal sheet that is to be machined next can be used straight away.

3. Image capture run: Traversing the target path at low speed or stand still at the target point of interest, with the camera recording a frame (image A). The encoder values at location A during the recording of frame A are known. For the purpose of optimised camera recordings, the illumination laser can also be switched on synchronously with the image recording.

4. Comparison (matching) between the virtual reconstruction image (image A'), which is known from precise encoder values, with the recorded actual image (image A).

5. Calculation of the contour deviation, i.e. determination of the displacement vector (Dx, Dy) between the virtual target image (image A') and the actually recorded actual image (image A).

6. Compensation for the contour deviation by adjusting the target trajectory (or target geometry).

7. Productive cutting

In contrast to method 1, method 2 cannot compare the midpoints of the images A and A' to determine the displacement vector. Because images A and A' only differ in that the path trajectories between the target one and the actual one are different. The displacement vector is therefore not quite as easy to determine. Which point of the actual path corresponds to the midpoint of image A' cannot be determined quite so easily. In a first approximation, however, it can be assumed that the displacement vector can be assumed to be perpendicular to the actual path.

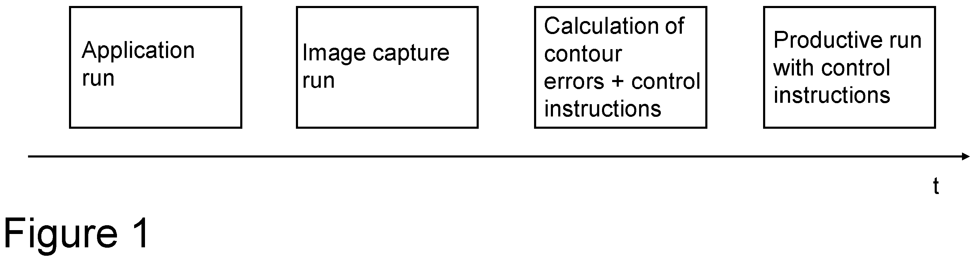

In a timeline view with horizontal time axis t, **figure 1** shows that several runs are carried out with the cutting head SK to determine the contour deviations ka: First, an application run is performed to apply a reference texture RT to the workpiece W; this can be done by engraving the reference texture RT onto the workpiece along the target path. This is followed by an image capture run for capturing images b, which depict the region of the tool centre point (TCP) on the workpiece. The optical capture device can be designed in the form of a camera arranged in the cutting head. Subsequently, control instructions are calculated, which contain correction instructions in order to compensate for the contour deviations previously determined by means of an image comparison between the actually captured images of the image capture run and virtual reconstruction images. A productive run can then be carried out to cut the parts according to the cutting plan, using the calculated control instructions and thus with compensation for the contour errors caused by mass inertia and/or resilience. During the application run, the laser is used for engraving and deactivated for cutting. The laser is also deactivated in the image capture run.

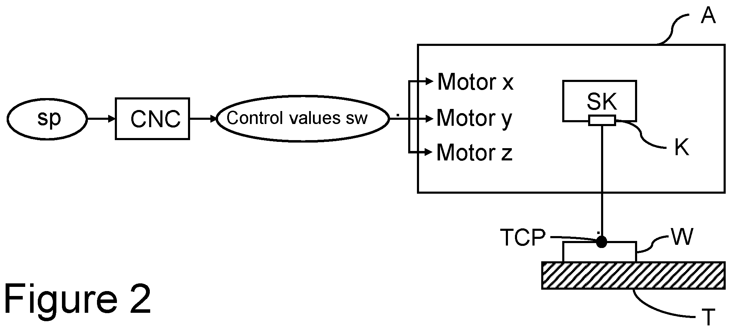

**Figure 2** shows a schematic representation of data sets and intermediate results that are relevant to the method. The cutting plan sp is read in by an entity via an interface or made available in some other way. The cutting plan sp is transferred to a controller, in particular a CNC (computer numerical control) controller CNC, which calculates control values sw from it. The control values sw are transmitted to a drive system A for moving components of the laser cutting head SK. The drive system A usually includes three motors in order to move at least one component of the cutting head SK in the three spatial axes (X-axis, Y-axis and Z-axis). A first control value sw1 can be output for driving a first motor in the X-axis direction, a second control value sw2 can be output for driving a second motor in the Y-axis direction, and a third control value sw3 can be output for driving a third motor in the Z-axis direction. The motors are used for the direct or indirect movement of the cutting head SK. An optical capture device, for example in the form of a camera K, is preferably arranged coaxially on the cutting head SK. The camera K is used to capture images of the workpiece W in the region of the tool centre point TCP. The workpiece W can be, for example, a metal sheet or another flat workpiece that lies on a work table T.

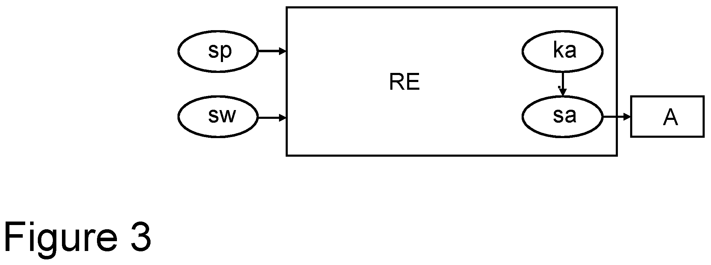

**Figure 3** shows the data sets processed by a computing unit RE according to an advantageous embodiment of the invention. The cutting plan sp and the control values sw are read in. The computing unit RE can determine the contour deviations ka at least from these values. The determined contour deviations ka can be output on a user interface, in particular before the control instructions sa are calculated. Control instructions sa, which include correction instructions ki, can be calculated from the determined contour deviations ka - in particular by the computing unit RE. The correction instructions ki are used to compensate for the determined contour deviations ka, which arise due to the mass inertia or the resilience of the moving components. The control instructions sa are transmitted to the drive system A for

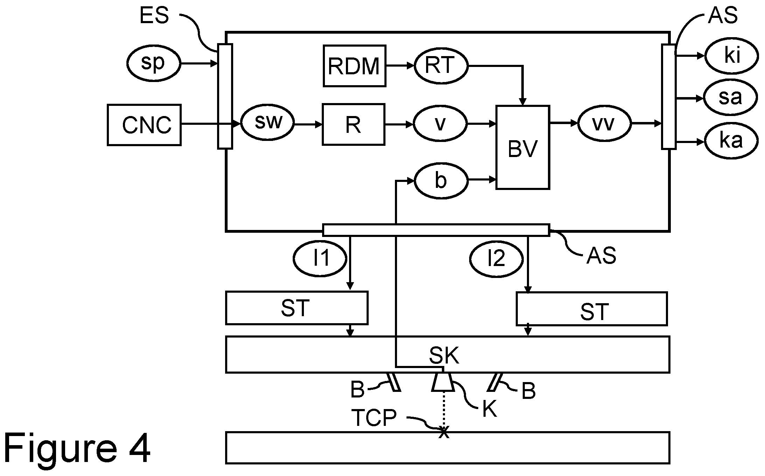

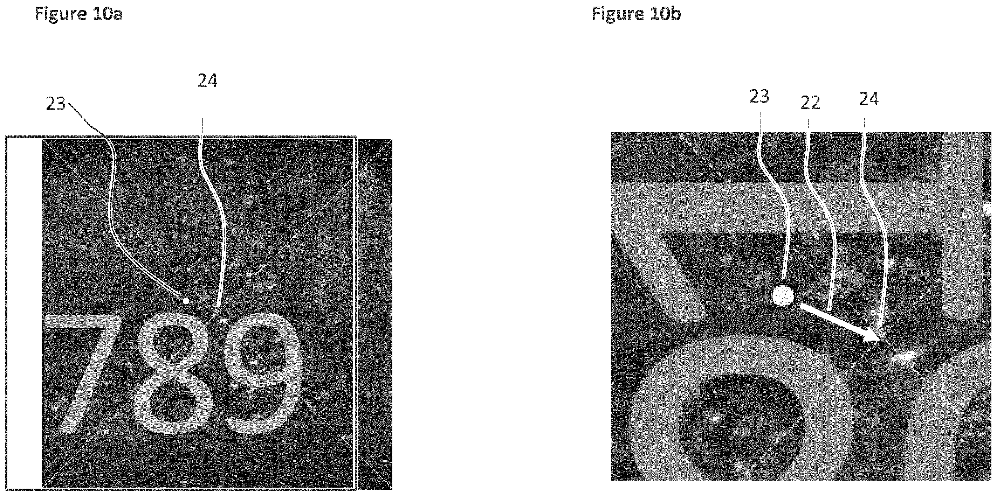

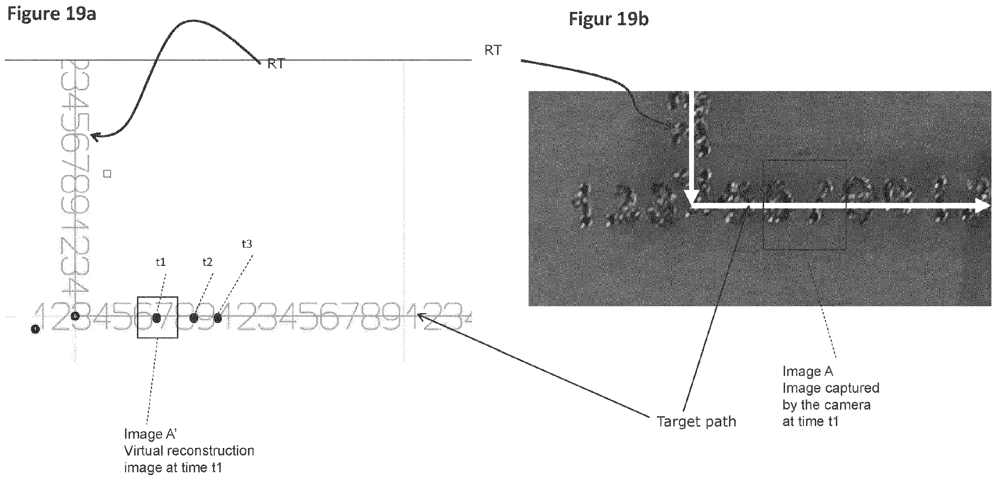

**Figure 4** is a block diagram of the computing unit RE. The computing unit RE comprises an input interface ES via which the cutting plan sp can be read in. Control values sw can be determined from the cutting plan sp. This can be done on a controller CNC. The computing unit RE also comprises a reference texture definition module RDM. The reference texture definition module RDM is configured to define a reference texture RT (in particular via inputs on a human-machine interface/HMI) or to read in an already defined reference texture RT (for example from an external database). The computing unit RE also comprises a reconstructor R. The reconstructor R is configured to generate or reconstruct a virtual reconstruction image v on the basis of control values sw and the defined reference text RT. The computing unit RE also has an image processing means BV, which can be implemented, for example, as an image processing algorithm and is intended to compare the image b actually captured by the camera K with the virtual reconstruction image v reconstructed by the reconstructor R. For this purpose, the image processing algorithm comprises a referencing means in order to be able to assign the actual and virtual images b, v to one another. The referencing means can act on the basis of the control values sw. The assignment of the reference texture and the control value is unique. The virtual image can now be extracted from the cutting plan for each point in time t. See figures 19a-19d in this regard. The calculation of the contour deviation (and, accordingly, of the displacement vector) can be seen in figures 10a and 10b.

In particular, a displacement vector vv is calculated, which represents the contour deviations between the path actually travelled and the intended target path (from the cutting plan sp). The contour deviation ka can thus be determined or calculated from the displacement vector vv. The contour deviation ka can be output via an output interface AS.

As already mentioned above, the calculated contour deviation ka can be further used to calculate control instructions sa that comprise correction instructions ki in order to compensate for the contour errors. The calculated control instructions sa are used to control the drive system A in a manner corrected for mass inertia.

The computing unit RE is in data exchange with an electronic controller ST for the cutting head SK. The computing unit RE transmits first instructions I1 to an electronic controller ST in order to trigger an application run of the laser cutting head SK. The computing unit RE transmits second instructions I2 to the electronic controller ST in order to instruct an image capture run of the laser cutting head SK. Furthermore, the images b captured by the camera K are transmitted to the computing unit RE via an interface of the electronic controller ST. Optionally, an illumination unit B can be provided for illuminating the process zone. In particular, the captured images b are transmitted to the image processing means BV, which is then designed to compare them with the virtual reconstruction images v in order to determine the displacement vector vv.

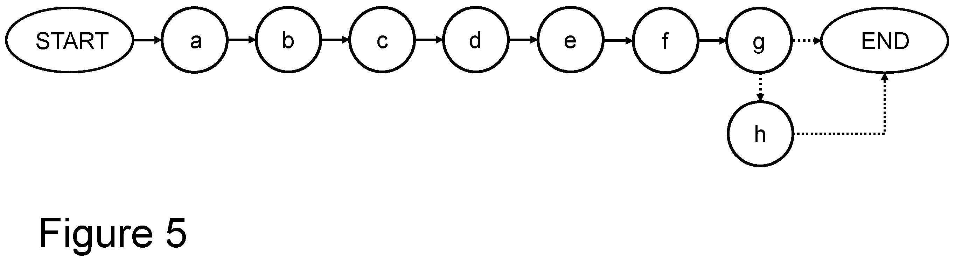

**Figure 5** is a flow chart of the method for determining contour deviations ka, which are used for controlling the laser cutting head SK in a manner that compensates for contour deviations. After the start of the method, in step a the cutting plan sp, in which the target path is specified, is read in. In step b, the reference texture RT is defined. This can either be done manually via a human-machine interface or the reference texture RT is read in via an interface from an external data memory. In a first embodiment, the reference texture RT is designed as a graphic pattern, in particular as a combination of numbers and/or letters. In a second embodiment, the reference texture RT can be linear and sometimes correspond to the target path. In a preferred development of the invention, the reference texture RT can be defined as a function of the target path to be cut. For example, the height of the reference texture RT can be adapted to the nozzle width. In step c, an application run is performed for applying and in particular engraving the reference texture RT onto the workpiece W along the target path. In step d, the image capture run for image capture using the camera K is performed. In step e, the virtual reconstruction image v is reconstructed. In step f, the image processing means BV is used to determine a match between the virtual reconstruction image v and the captured image b at the same matching position in order to derive the displacement vector vv therefrom. The referencing between the image and the virtual reconstruction image v takes place via the control values sw. The control values are time-based. At any time t, the control values ($x\_d(t)$ and $y\_d(t)$) are known. In order to be able to determine/reconstruct the virtual image, the position is needed on the target path at which the image was recorded. This allows the comparison between the virtual and the actually recorded image to be calculated.

In step g, the contour deviation ka is calculated from the displacement vector vv and output. After that, the method can end. In an advantageous embodiment, however, step h follows, in which control instructions sa are calculated from the calculated contour deviation ka in order to control the drive system A using the correction instructions ki to compensate for the contour deviation ka.

After completing these steps, the improved system can be used for productive cutting. In this case, the laser system is preferably calibrated with regard to the respective mechanical components of the laser system.

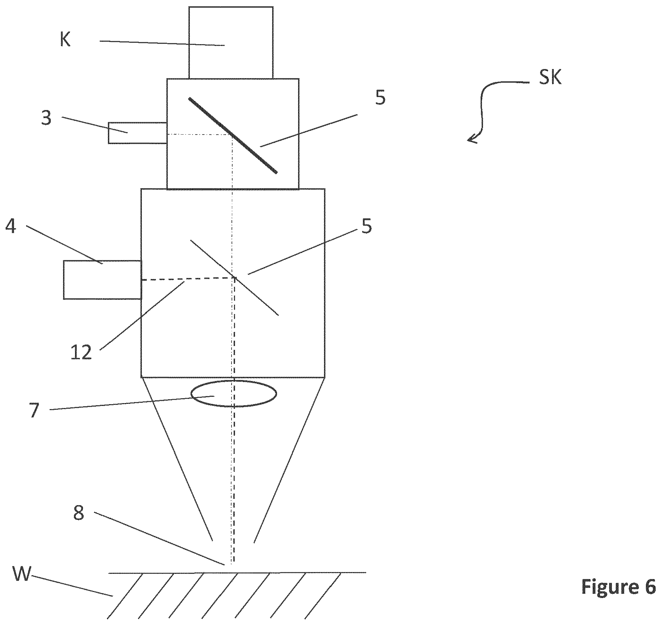

**Figure 6** shows a cutting head SK of a laser processing machine, which has an adapted camera K, having a field of view (FoV) which looks at the process ideally coaxially with respect to the machining laser beam. The process or cutting zone is constantly tracked by this arrangement of the camera K, which makes it possible for any contour deviations to be detected. To further optimise process monitoring, coaxial process illumination 3 is adapted (with an illumination laser beam shown dashed), which illuminates the process location 8 on the workpiece W.Optical deflection elements 5 and/or lenses 7 are arranged in the beam path 12 of the machining laser beam. A laser source 4 can focus the machining laser beam onto the workpiece W via suitable optical elements, such as optical lenses 7.

In order to determine possible path deviations, it is proposed that the cutting head SK described above be used to determine the path deviations (in particular at corners) in a calibration process, to calculate corresponding correction instructions ki and then to apply these for and during productive machining of parts, which reduces path deviations and/or reduces the time per part, with the path deviation remaining the same.

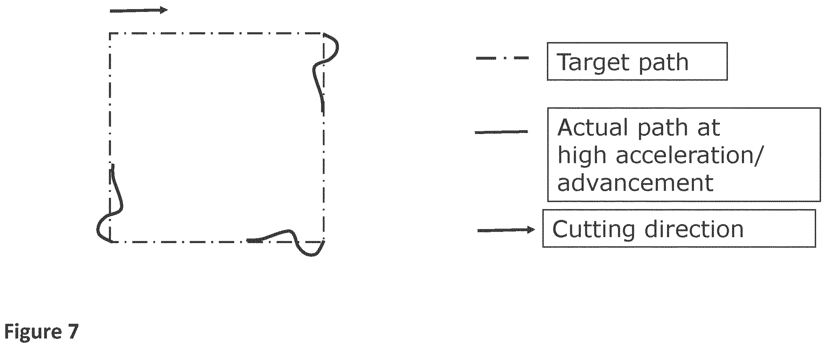

As shown schematically in **figure 7,** contour deviations occur in particular at corners or in the case of tight radii. The target path is shown in figure 7 as a dash-dot line, and the cutting direction is marked with the arrow. Depending on the speed (advancement of the cutting head), the path actually travelled, i.e. the actual path (shown with a solid line in figure 7), deviates from the target path SB.In particular at high speeds and/or accelerations, the actual path actually traversed by the cutting head SK will deviate from the target path. At the corners, the actual path will typically overshoot the target path.

The contour deviations to be expected can depend on the dynamics. The higher the axis accelerations and/or speeds selected, the greater the deviations to be expected.

To avoid this, automatically calculated adjustments are made on the basis of calculated correction instructions ki.

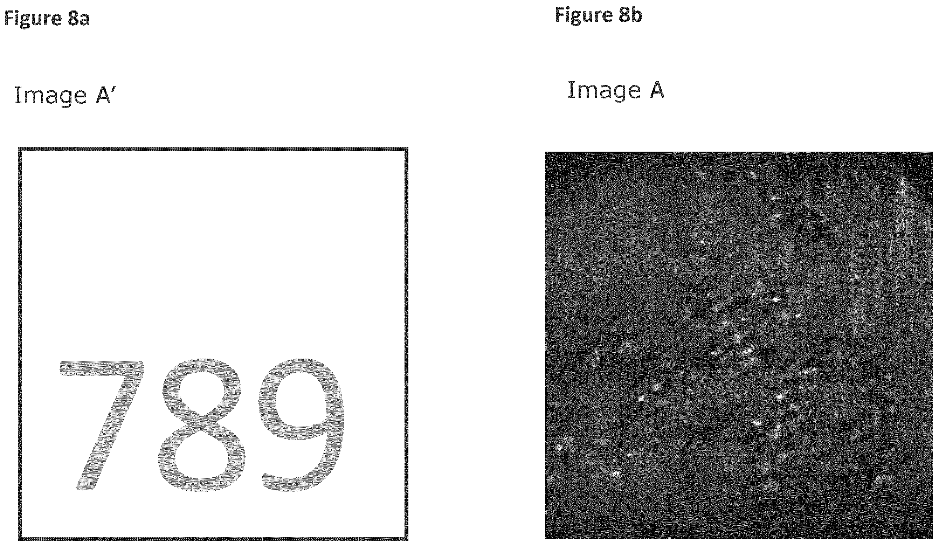

**Figure 8a** shows a virtual reconstruction image v as image A' and **figure 8b** shows an image b (actually) captured with the camera K (real) as image A. These two images v, b are fed to the image processing means BV for image matching.

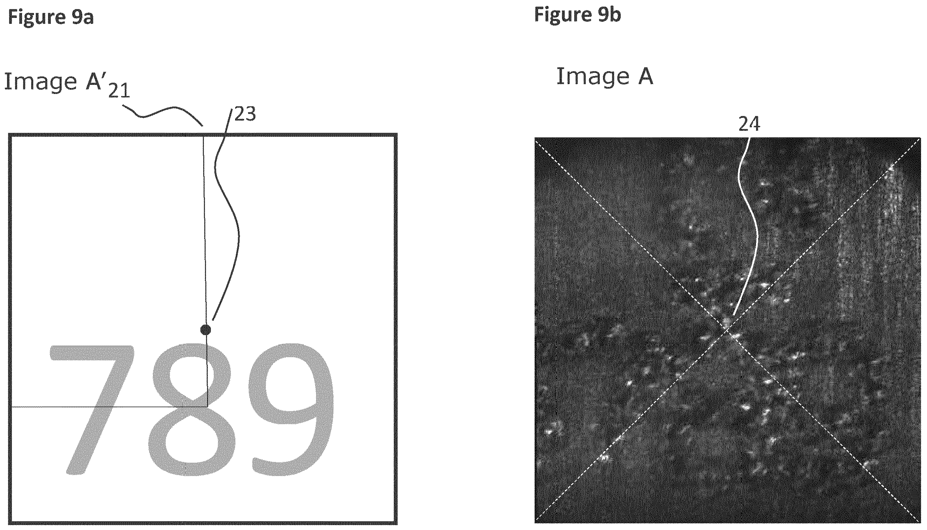

**Figure 9a** shows a virtual reconstruction image v as image A' and **figure 9b** shows an image b actually captured by the camera K as image A. In image A' (figure 9a), for illustration, the target path, here marked with reference sign 21, and an image midpoint 23 are shown. The image midpoint is reconstructed in the actual image A (figure 9b) and is marked with reference sign 24. The target path and the image midpoint are not part of the image and are only added here for better understanding.

The assignment of the reference texture and the control value is unique. The virtual image can now be extracted from the cutting plan for each point in time t (see figures 19a-19d below in this regard). The calculation of the contour deviation (and, accordingly, of the displacement vector) can be seen in figures 10a and 10b.

**Figure 10a** shows a matching or image comparison of the two images in the form of a superimposition of the real image over the virtual reconstruction image using the respective image midpoints 23, 24 (cf. figure 9). **Figure 10b** shows the matching representation from figure 10a in an enlarged view. The zoomed detail around the midpoints 23, 24 shown in figure 10b shows that the image midpoints do not coincide perfectly. The displacement vector vv is marked with reference sign 22 in figure 10b.

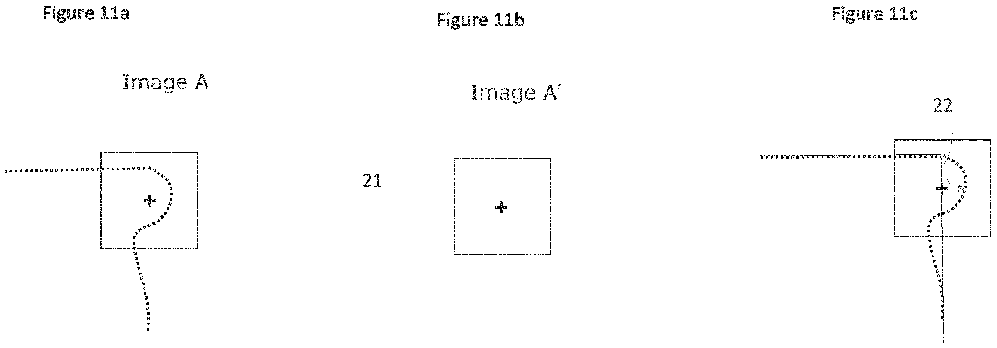

**Figure 11a** shows a schematic view of an image recorded with the camera K with the actual path shown dotted and the image midpoint marked as a cross. **Figure 11b** shows the virtual reconstruction image as image A' with the target path 21 and the image midpoint, which is also marked as a cross. Figure 11c schematically shows the superimposed image for the image comparison of the image processing means BV. The displacement vector v is marked with the reference sign 22 here.

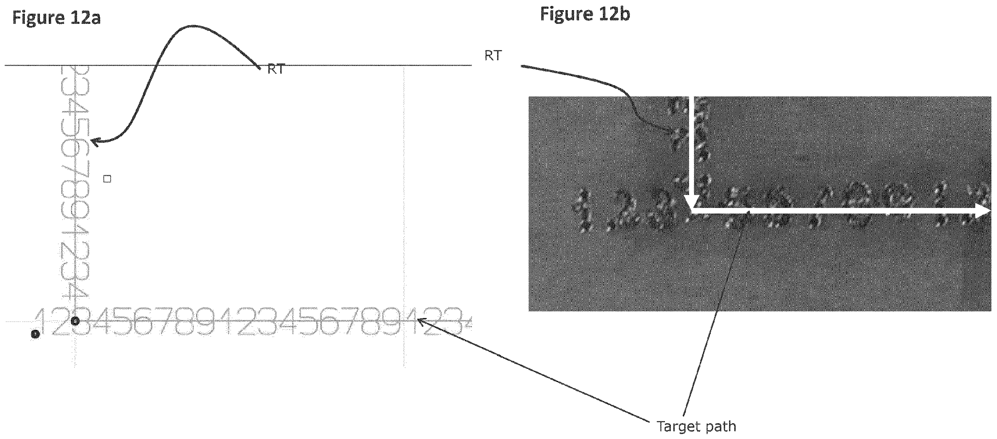

**Figure 12a** is an example of a reference texture RT in the form of a series of numbers in a virtual reconstruction image, and **figure 12b** shows a corresponding actually captured image in which the applied engraving of the reference texture RT can be seen at the same position.

**Figure 13** shows an example of how method 1 is carried out (first embodiment of the invention; see above). The image tuple from the virtual reconstruction image (image A') and the image (image A) captured by the camera is shown on the left-hand side, and the image comparison (mapping) is shown on the right-hand side. In the example above, there is a relatively good fit/match. In the example below, there is a poor match and therefore a high degree of contour deviation.

**Figure 14** shows an example of the application or embodiment of the method 2 (second embodiment of the invention; see above). The reference texture RT is applied here precisely along and in particular precisely on the target path and is identified by the reference sign 21 and the displacement vector vv by the reference sign 22. The contour deviation is determined from the displacement vector vv, which is then part of the calibrated control instructions sa with the correction instructions ki.

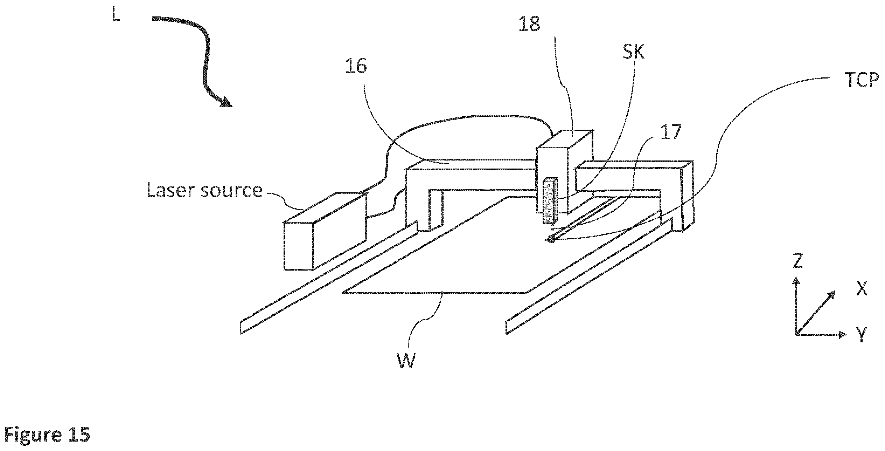

**Figure 15** shows a front view of a laser cutting machine L in a schematic representation with a cutting grid (only indicated) on which a workpiece W to be machined is positioned and a cutting head SK, a machining laser beam 17 and a tool centre point TCP. Reference sign 16 denotes the bridge (Y-axis) and reference sign 18 denotes the Z-axis.

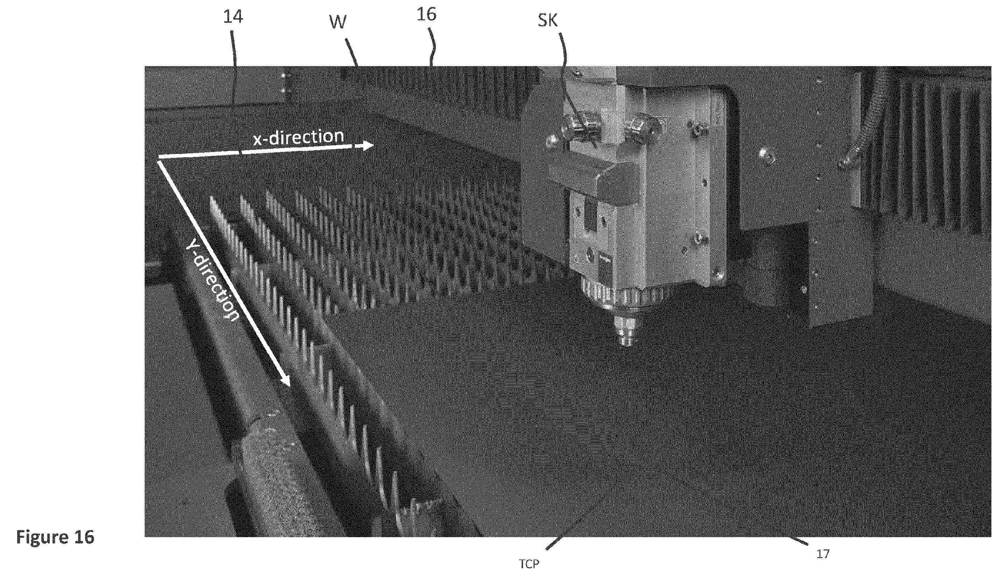

**Figure 16** is a representation of a laser cutting machine L with a cutting grid 14, a workpiece W, a cutting head SK arranged on the bridge 16 and a machining laser beam 17 and the tool centre point TCP.

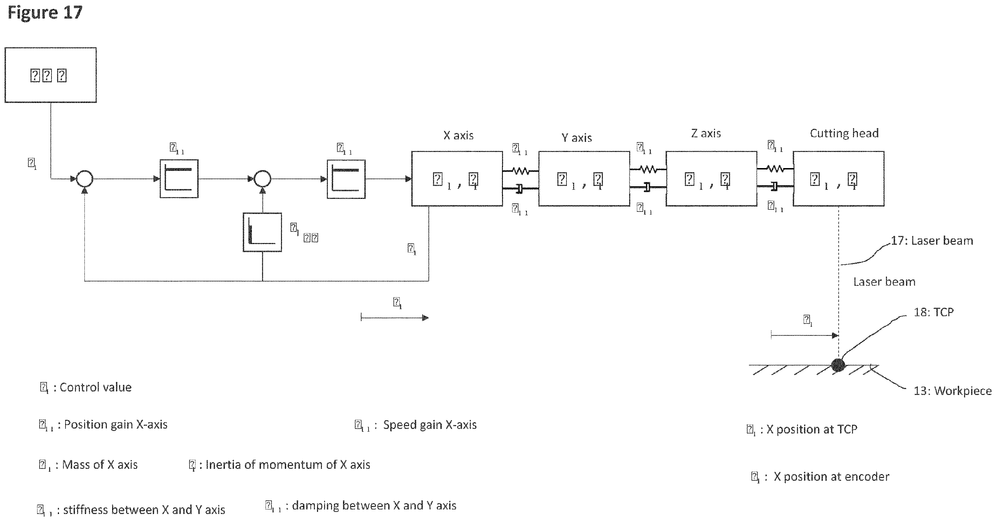

**Figure 17** schematically shows a cascaded control circuit of a machine drive using the example of the X-axis.

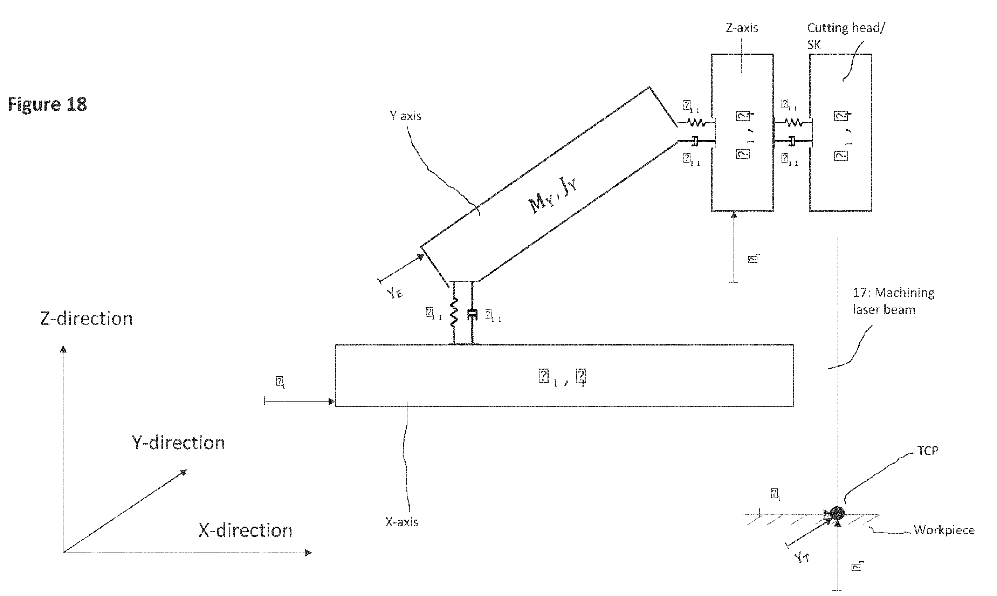

**Figure 18** is an overview of the axis system.

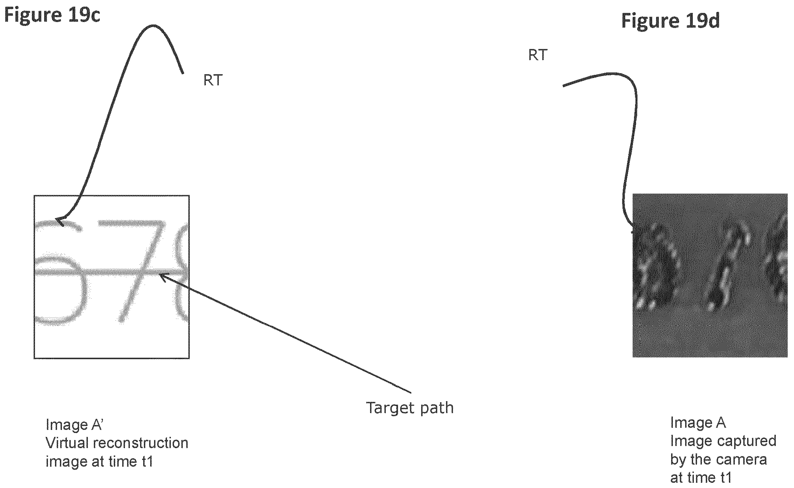

Figures 19 a to d show representations of a virtual reconstruction image and an image captured with the camera. The reference texture RT is applied on or along the target path. In figure 19a, as an example, a virtual reconstruction image at time t1 is shown framed. Figure 19b shows the image captured by the camera at this time t1. Figures 19c and d show enlarged views of the images shown in figures 19a and b.

Optionally, the steps c to g of the method mentioned above can be carried out at predefinable specific positions in the workspace and/or for all or selected workpieces and/or parts to be cut in order to reflect and take into account the position dependency of the contour deviation determination. If the target path and the reference texture RT are at a position in the laser workspace that is off centre (for example at one end of the work table, such that certain axes are fully extended), then different contour deviations occur than if the position is central and is in the middle of the workspace. It is therefore possible to carry out the application run and the image capture run at different positions in the workspace. Certain positions can be automatically preconfigured for this and be displayed on the HMI, which the user can then accept or reject.

Finally, it should be noted that the description of the invention and the exemplary embodiments are not to be understood as limiting in terms of a particular physical realisation of the invention. All of the features explained and shown in connection with individual embodiments of the invention can be provided in different combinations in the subject matter according to the invention to simultaneously realise the advantageous effects thereof.

The scope of protection of the present invention is given by the claims and is not limited by the features illustrated in the description or shown in the figures.

It is particularly obvious to a person skilled in the art that the invention can be used not only for laser processing machines with a coaxial camera, but also for those that have a different camera arrangement and are suitable for capturing the reference texture RT during an image capture run. Furthermore, the components of the computing unit RE can be realised or implemented in a distributed manner on a plurality of physical products. For example, the method can be carried out entirely on the laser processing machine, or resource-intensive calculations, such as the reconstruction of the reconstruction image v, can also be outsourced to a different hardware entity. For example, the reconstruction in step e and/or the application of the image processing means in step f could be outsourced to a central server that performs the calculations and then only returns the calculated displacement vector vv to the laser processing machine.

## Claims

1. A method for calculating contour deviations (ka) for controlling a laser cutting machine (L), which can arise when cutting workpieces (W) with a machining laser beam of the laser cutting machine (L), having the following method steps:

   a) reading in a cutting plan (sp) that specifies a target path for a laser cutting head (SK) of the laser cutting machine (L);
   b) defining a reference texture (RT) or reading in a reference texture (RT) from the cutting plan (sp), wherein the reference texture (RT) is an engraving;
   c) performing an application run of the laser cutting head (SK) to apply the reference texture (RT) at least at selected positions along the target path on the workpiece (W);
   d) performing an image capture run of the laser cutting head (SK) to capture at least one image (b), in which at least part of the applied reference texture (RT) is imaged, by means of an optical capture device (K) arranged on the laser cutting head (SK), at at least one of the selected positions along the target path;
   e) reconstructing at least one virtual reconstruction image (v) on the basis of control values (sw) that are calculated from the target path and on the basis of the defined reference texture (RT);
   f) using an image processing means (BV) to compare the captured at least one image (b) and the reconstructed virtual reconstruction image (v) to determine a displacement vector (vv) between associated pixels in each case;
   g) outputting the contour deviation (ka) calculated from the determined displacement vector (vv).

2. The method according to claim 1, including:
   h) calculating and executing control instructions (sa) with correction instructions (kl) to compensate for the calculated contour deviations (ka).

3. The method according to any one of the preceding claims, in which the reference texture (RT) is applied in the application run with reduced dynamic values that are lower than productive dynamic values and in which the reference texture (RT) along the target path is traversed with productive dynamic values in the image capture run with the laser deactivated and the at least one image (b) is captured in the process in step d).

4. The method according to claim 1 or 2, in which the reference texture is applied in the application run with productive dynamic values that correspond to those that are used in productive machining and in which the target path is traversed in the image capture run with a reduced dynamic value with the laser deactivated and the at least one image is captured in the process in step d).

5. The method according to any one of the preceding claims, in which the traversing on or along the target path is carried out with a machining laser beam of the laser cutting machine (L), which is deactivated for cutting.

6. The method according to any one of the preceding claims, in which the comparison in step f) takes place at a midpoint position of the respective images (b, v).

7. The method according to any one of the preceding claims, in which the reference texture (RT) is a texture applied to a carrier object, wherein the carrier object is arranged fixedly on a carrier region of the laser cutting machine (L) for the workpiece (W) and is position-calibrated there.

8. The method according to any one of the preceding claims, in which the optical capture device comprises at least one camera (K), which is arranged in or on the laser cutting head (SK) or on the drive system (A) of the laser cutting head (SK).

9. The method according to any one of the preceding claims, in which an actual path is extracted from the at least one captured image (b).

10. The method according to any one of the preceding claims, in which the method is carried out before or during a productive cutting process.

11. The method according to any one of the preceding claims, in which the at least one image (b) is captured by activating an illumination means (B).

12. A computing unit (RE) for carrying out the method according to any one of the preceding claims, having:

- a read-in interface (ES) for reading in a cutting plan (sp) that specifies a target path for a laser cutting head (SK) of the laser processing machine (L);
- a reference texture definition module (RDM) for defining a reference texture (RT) or for reading in the reference texture (RT) from the cutting plan (sp), wherein the reference texture (RT) is an engraving;
- wherein the computing unit (RE) is designed to issue first instructions (I1) in order to cause an application run of the laser cutting head (SK) to apply the reference texture (RT) at least at selected positions along the target path on the workpiece (W);
- wherein the computing unit (RE) is further designed to issue second instructions (12) in order to cause an image capture run of the laser cutting head (SK) for capturing at least one image (b), in which at least part of the applied reference texture (RT) is imaged, by means of an optical capture device (K) arranged on the laser cutting head (SK), at at least one of the selected positions along the target path;
- a reconstructor (R), which is designed to reconstruct at least one virtual reconstruction image (v) on the basis of control values (sw) that are calculated from the target path and on the basis of the defined reference texture (RT);
- an image processing means (BV), which is designed to compare the captured at least one image (b) and the reconstructed virtual reconstruction image (v) to determine a displacement vector (vv) between associated pixels in each case;
- an output interface (AS) designed to output the contour deviation (ka) calculated from the determined displacement vector (vv).

13. A laser cutting machine having a computing unit according to the preceding claim.

14. The laser cutting machine according to claim 13, which further comprises a calibration module that is configured to calculate and carry out control instructions (sa) with correction instructions (kl) to compensate for the calculated contour deviations (ka).

15. A computer program, wherein the computer program can be loaded into a memory unit of a computer and in particular into a computing unit (RE) and contains program code sections in order to cause the computer to carry out the method for determining path deviations for controlling a laser cutting machine (L) according to any one of the preceding method claims when the computer program is executed in the computer.

**Patentansprüche**

1. Verfahren zur Berechnung von Konturabweichungen (ka) zur Steuerung einer Laserschneidmaschine (L), die beim Schneiden von Werkstücken (W) mit einem Bearbeitungslaserstrahl der Laserschneidmaschine (L) entstehen können, mit den folgenden Verfahrensschritten:

a) Einlesen eines Schneidplans (sp), der eine Sollbahn für einen Laserschneidkopf (SK) der Laserschneidmaschine (L) angibt;
b) Definieren einer Referenztextur (RT) oder Einlesen einer Referenztextur (RT) aus dem Schneidplan (sp), wobei die Referenztextur (RT) eine Gravur ist;
c) Durchführen eines Applikationslaufs des Laserschneidkopfes (SK), um die Referenztextur (RT) mindestens an ausgewählten Positionen entlang der Sollbahn auf das Werkstück (W) anzuwenden;

d) Durchführen eines Bilderfassungslaufs des Laserschneidkopfes (SK), um mindestens ein Bild (b), in dem mindestens ein Teil der aufgebrachten Referenztextur (RT) abgebildet ist, mittels einer am Laserschneidkopf (SK) angeordneten optischen Erfassungsvorrichtung (K) an mindestens einer der ausgewählten Positionen entlang der Sollbahn aufzunehmen;

e) Rekonstruieren mindestens eines virtuellen Rekonstruktionsbildes (v) auf der Grundlage von Steuerwerten (sw), die aus der Sollbahn und auf der Grundlage der definierten Referenztextur (RT) berechnet werden;

f) Verwenden eines Bildverarbeitungsmittels (BV), um das mindestens eine aufgenommene Bild (b) und das rekonstruierte virtuelle Rekonstruktionsbild (v) zu vergleichen, um einen Verschiebungsvektor (vv) zwischen jeweils zugeordneten Pixeln zu bestimmen;

g) Ausgeben der aus dem bestimmten Verschiebungsvektor (vv) berechneten Konturabweichung (ka).

2. Verfahren nach Anspruch 1, einschließlich:
h) Berechnen und Ausführen von Steuerungsanweisungen (sa) mit Korrekturanweisungen (kl), um die berechneten Konturabweichungen (ka) auszugleichen.

3. Verfahren nach einem der vorstehenden Ansprüche, bei dem die Referenztextur (RT) im Applikationslauf mit reduzierten Dynamikwerten angewendet wird, die niedriger sind als produktive Dynamikwerte, und bei dem die Referenztextur (RT) entlang der Sollbahn mit produktiven Dynamikwerten im Bilderfassungslauf bei deaktiviertem Laser durchlaufen wird und das mindestens eine Bild (b) im Verfahren in Schritt d) erfasst wird.

4. Verfahren nach Anspruch 1 oder 2, bei dem die Referenztextur im Applikationslauf mit produktiven Dynamikwerten angewandt wird, die denen entsprechen, die bei der produktiven Bearbeitung verwendet werden, und bei dem die Sollbahn im Bilderfassungslauf mit einem reduzierten Dynamikwert bei deaktiviertem Laser durchlaufen wird und das mindestens eine Bild in dem Verfahren in Schritt d) erfasst wird.

5. Verfahren nach einem der vorstehenden Ansprüche, bei dem das Durchlaufen auf oder entlang der Sollbahn mit einem Bearbeitungslaserstrahl der Laserschneidmaschine (L) durchgeführt wird, der zum Schneiden deaktiviert ist.

6. Verfahren nach einem der vorstehenden Ansprüche, bei dem der Vergleich in Schritt f) an einer mittleren Position der jeweiligen Bilder (b, v) erfolgt.

7. Verfahren nach einem der vorstehenden Ansprüche, bei dem die Referenztextur (RT) eine auf ein Tragteil angewandte Textur ist, wobei das Tragteil fest auf einem Trägerbereich der Laserschneidmaschine (L) für das Werkstück (W) angeordnet und dort positionskalibriert ist.

8. Verfahren nach einem der vorhergehenden Ansprüche, bei dem die optische Erfassungsvorrichtung mindestens eine Kamera (K) umfasst, die im oder am Laserschneidkopf (SK) oder am Antriebssystem (A) des Laserschneidkopfes (SK) angeordnet ist.

9. Verfahren nach einem der vorstehenden Ansprüche, bei dem ein tatsächlicher Pfad aus dem mindestens einen erfassten Bild (b) extrahiert wird.

10. Verfahren nach einem der vorstehenden Ansprüche, bei dem das Verfahren vor oder während eines produktiven Schneidprozesses durchgeführt wird.

11. Verfahren nach einem der vorstehenden Ansprüche, bei dem das mindestens eine Bild (b) durch Aktivierung einer Beleuchtungseinrichtung (B) aufgenommen wird.

12. Recheneinheit (RE) zur Durchführung des Verfahrens nach einem der vorstehenden Ansprüche, die Folgendes aufweist:

- eine Einlese-Schnittstelle (ES) zum Einlesen eines Schneidplans (sp), der eine Sollbahn für einen Laserschneidkopf (SK) der Laserbearbeitungsmaschine (L) angibt;
- ein Referenz-Texturdefinitionsmodul (RDM) zum Definieren einer Referenztextur (RT) oder zum Einlesen der Referenztextur (RT) aus dem Schneidplan (sp), wobei die Referenztextur (RT) eine Gravur ist;
- wobei die Recheneinheit (RE) so ausgelegt ist, dass sie erste Anweisungen (I1) ausgibt, um einen Applikationslauf des Laserschneidkopfes (SK) zu veranlassen, die Referenztextur (RT) mindestens an ausgewählten Positionen entlang der Sollbahn auf das Werkstück (W) anzuwenden;
- wobei die Recheneinheit (RE) ferner ausgelegt ist, zweite Anweisungen (I2) auszugeben, um einen Bilderfassungslauf des Laserschneidkopfes (SK) zur Aufnahme mindestens eines Bildes (b) zu veranlassen, in dem mindestens ein Teil der angewendeten Referenztextur (RT) mittels einer am Laserschneidkopf (SK) angeordneten optischen Erfassungsvorrichtung (K) an mindestens einer der ausgewählten Positionen entlang der Sollbahn aufgenommen wird;
- einen Rekonstruktor (R), der so ausgelegt ist, dass er mindestens ein virtuelles Rekonstruktionsbild (v) auf der Grundlage von Steuerwerten (sw) rekonstruiert, die aus der Sollbahn und auf der Grundlage der definierten Referenztextur (RT) berechnet werden;

- ein Bildverarbeitungsmittel (BV), das so ausgelegt ist, dass es das mindestens eine aufgenommene Bild (b) und das rekonstruierte virtuelle Rekonstruktionsbild (v) vergleicht, um einen Verschiebungsvektor (vv) zwischen jeweils zugeordneten Pixeln zu bestimmen;

- eine Ausgabeschnittstelle (AS), die so ausgelegt ist, dass sie die aus dem bestimmten Verschiebungsvektor (vv) berechnete Konturabweichung (ka) ausgibt.

13. Laserschneidmaschine, die eine Recheneinheit nach dem vorstehenden Anspruch aufweist.

14. Laserschneidmaschine nach Anspruch 13, die ferner ein Kalibrierungsmodul umfasst, das konfiguriert ist, um Steuerungsanweisungen (sa) mit Korrekturanweisungen (kl) zu berechnen und auszuführen, um die berechneten Konturabweichungen (ka) zu kompensieren.

15. Computerprogramm, wobei das Computerprogramm in eine Speichereinheit eines Computers und insbesondere in eine Recheneinheit (RE) geladen werden kann und Programmcodeabschnitte enthält, um den Computer zu veranlassen, das Verfahren zum Bestimmen von Pfadabweichungen zur Steuerung einer Laserschneidmaschine (L) nach einem der vorstehenden Verfahrensansprüche auszuführen, wenn das Computerprogramm in dem Computer ausgeführt wird.

**Revendications**

1. Procédé de calcul d'écarts de contour (ka) pour commander une machine de découpe laser (L), lesquels peuvent survenir lors de la découpe de pièces (W) avec un faisceau laser d'usinage de la machine de découpe laser (L), comprenant les étapes de procédé suivantes :

a) lecture d'un plan de découpe (sp) qui spécifie une trajectoire cible pour une tête de découpe laser (SK) de la machine de découpe laser (L) ;
b) définition d'une texture de référence (RT) ou lecture d'une texture de référence (RT) à partir du plan de découpe (sp), dans lequel la texture de référence (RT) est une gravure ;
c) réalisation d'un cycle d'application de la tête de découpe laser (SK) pour appliquer la texture de référence (RT) au moins à des positions sélectionnées le long de la trajectoire cible sur la pièce (W) ;

d) réalisation d'un cycle de capture d'image de la tête de découpe laser (SK) pour capturer au moins une image (b), dans laquelle au moins une partie de la texture de référence (RT) appliquée est imagée, au moyen d'un dispositif de capture optique (K) disposé sur la tête de découpe laser (SK), à au moins une des positions sélectionnées le long de la trajectoire cible ;
e) reconstruction d'au moins une image de reconstruction virtuelle (v) sur la base de valeurs de commande (sw) qui sont calculées à partir de la trajectoire cible et sur la base de la texture de référence (RT) définie ;
f) utilisation d'un moyen de traitement d'image (BV) pour comparer l'au moins une image (b) capturée et l'image de reconstruction virtuelle (v) reconstruite afin de déterminer un vecteur de déplacement (vv) entre des pixels associés dans chaque cas ;
g) sortie de l'écart de contour (ka) calculé à partir du vecteur de déplacement (vv) déterminé.

2. Procédé selon la revendication 1, comprenant :
h) le calcul et l'exécution d'instructions de commande (sa) avec des instructions de correction (kl) pour compenser les écarts de contour (ka) calculés.

3. Procédé selon l'une quelconque des revendications précédentes, dans lequel la texture de référence (RT) est appliquée dans le cycle d'application avec des valeurs dynamiques réduites qui sont inférieures aux valeurs dynamiques productives et dans lequel la texture de référence (RT) le long de la trajectoire cible est parcourue avec des valeurs dynamiques productives dans le cycle de capture d'image avec le laser désactivé et l'au moins une image (b) est capturée dans le processus à l'étape d).

4. Procédé selon la revendication 1 ou 2, dans lequel la texture de référence est appliquée dans le cycle d'application avec des valeurs dynamiques productives qui correspondent à celles qui sont utilisées dans l'usinage productif et dans lequel la trajectoire cible est parcourue dans le cycle de capture d'image avec une valeur dynamique réduite, le laser étant désactivé, et l'au moins une image est capturée dans le processus à l'étape d).

5. Procédé selon l'une quelconque des revendications précédentes, dans lequel le parcours sur ou le long de la trajectoire cible est réalisé à l'aide d'un faisceau laser d'usinage de la machine de découpe laser (L), qui est désactivé pour la découpe.

6. Procédé selon l'une quelconque des revendications précédentes, dans lequel la comparaison à l'étape f) a lieu à une position médiane des images (b, v) respectives.

7. Procédé selon l'une quelconque des revendications précédentes, dans lequel la texture de référence (RT) est une texture appliquée à un objet de support, dans lequel l'objet de support est disposé à demeure sur une zone de support de la machine de découpe laser (L) pour la pièce (W) et sa position est étalonnée à cet endroit.

8. Procédé selon l'une quelconque des revendications précédentes, dans lequel le dispositif de capture optique comprend au moins une caméra (K), qui est disposée dans ou sur la tête de découpe laser (SK) ou sur le système d'entraînement (A) de la tête de découpe laser (SK).

9. Procédé selon l'une quelconque des revendications précédentes, dans lequel une trajectoire réelle est extraite de l'au moins une image (b) capturée.

10. Procédé selon l'une quelconque des revendications précédentes, dans lequel le procédé est réalisé avant ou pendant un processus de découpe productif.

11. Procédé selon l'une quelconque des revendications précédentes, dans lequel l'au moins une image (b) est capturée par activation d'un moyen d'éclairage (B).

12. Unité de calcul (RE) pour la réalisation du procédé selon l'une quelconque des revendications précédentes, comportant :

   - une interface de lecture (ES) pour lire un plan de découpe (sp) qui spécifie une trajectoire cible pour une tête de découpe laser (SK) de la machine de traitement laser (L) ;
   - un module de définition de texture de référence (RDM) pour définir une texture de référence (RT) ou pour lire la texture de référence (RT) à partir du plan de découpe (sp), dans lequel la texture de référence (RT) est une gravure ;
   - dans lequel l'unité de calcul (RE) est conçue pour émettre des premières instructions (I1) afin de provoquer un cycle d'application de la tête de découpe laser (SK) pour appliquer la texture de référence (RT) au moins à des positions sélectionnées le long de la trajectoire cible sur la pièce (W) ;
   - dans lequel l'unité de calcul (RE) est en outre conçue pour émettre des secondes instructions (I2) afin de provoquer un cycle de capture d'image de la tête de découpe laser (SK) pour capturer au moins une image (b), dans lequel au moins une partie de la texture de référence (RT) appliquée est imagée, au moyen d'un dispositif de capture optique (K) disposé sur la tête de découpe laser (SK), sur au moins l'une des positions sélectionnées le long de la trajectoire cible ;
   - un reconstructeur (R), qui est conçu pour reconstruire au moins une image de reconstruction virtuelle (v) sur la base de valeurs de commande (sw) calculées à partir de la trajectoire cible et sur la base de la texture de référence (RT) définie ;
   - un moyen de traitement d'image (BV), qui est conçu pour comparer l'au moins une image (b) capturée et l'image de reconstruction virtuelle (v) reconstruite afin de déterminer un vecteur de déplacement (vv) entre les pixels associés dans chaque cas ;
   - une interface de sortie (AS) conçue pour sortir l'écart de contour (ka) calculé à partir du vecteur de déplacement (vv) déterminé.

13. Machine de découpe laser dotée d'une unité de calcul selon la revendication précédente.

14. Machine de découpe laser selon la revendication 13, qui comprend en outre un module d'étalonnage qui est configuré pour calculer et réaliser des instructions de commande (sa) avec des instructions de correction (kl) pour compenser les écarts de contour (ka) calculés.

15. Programme informatique, le programme informatique pouvant être chargé dans une unité de mémoire d'un ordinateur et en particulier dans une unité de calcul (RE) et contenant des sections de code de programme afin d'amener l'ordinateur à réaliser le procédé de détermination des écarts de trajectoire pour commander une machine de découpe laser (L) selon l'une quelconque des revendications de procédé précédentes lorsque le programme informatique est exécuté dans l'ordinateur.

| Application run | Image capture run | Calculation of contour errors + control instructions | Productive run with control instructions |

→ t

# Figure 1

Figure 2

Figure 4

Figure 5

EP 4 419 286 B1

Figure 6

Target path — · —

Actual path at high acceleration/advancement ——

Cutting direction →

Figure 7

Figure 8b

Image A

Figure 8a

Image A'

Figure 9a

Image A'21

Figure 9b

Image A

Figure 10b

Figure 10a

Figure 11a

Image A

Figure 11b

Image A′

Figure 11c

Figure 12a

Figure 12b

Target path

RT

RT

Midpoint comparison:
Image A – A'

Image A
Image captured
by the camera

Image A'
Virtual
recontruction
image

Figure 13

Figure 14

Figure 15

Figure 16

**Figure 17**

X axis  Y axis  Z axis  Cutting head

17: Laser beam

Laser beam

18: TCP

13: Workpiece

$\square_i$ : Control value

$\square_{11}$ : Position gain X-axis          $\square_{11}$ : Speed gain X-axis

$\square_1$ : Mass of X axis          $\square_1$ : Inertia of momentum of X axis

$\square_{11}$ : stiffness between X and Y axis          $\square_{11}$ : damping between X and Y axis

$\square_1$ : X position at TCP

$\square_1$ : X position at encoder

## Figure 18

Cutting head/ SK

Z-axis

17: Machining laser beam

TCP

Workpiece

Y axis

X-axis

Z-direction

Y-direction

X-direction

EP 4 419 286 B1

**Figure 19a**

**Figur 19b**

RT

RT

t1  t2  t3

Image A'
Virtual reconstruction
image at time t1

Target path

Image A
Image captured
by the camera
at time t1

## Figure 19c

RT

Target path

Image A'
Virtual reconstruction
image at time t1

## Figure 19d

RT

Image A
Image captured
by the camera
at time t1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018217919 A1
- DE 102018217940 A1
- DE 102005022095 A1